# EUROPEAN PATENT SPECIFICATION

(11) **EP 3 607 113 B1**
(45) Date of publication and mention of the grant of the patent: **19.07.2023**
(21) Application number: 18718918.8
(22) Date of filing: 28.03.2018
(51) Int. Cl.: C25B 1/04, C25B 9/23, C25B 9/73, C25B 11/065, C25B 11/091, C25B 13/08

(54) **WATER ELECTROLYZERS**
WASSERELEKTROLYSATOREN
ÉLECTROLYSEURS D'EAU

(30) Priority: 03.04.2017 US 201762480794 P
(43) Date of publication of application: 12.02.2020
(73) Proprietor: 3M Innovative Properties Company, Saint Paul, Minnesota 55133-3427 (US)
(72) Inventor: LEWINSKI, Krzysztof A., Saint Paul, Minnesota 55133-3427 (US); LUOPA, Sean M., Saint Paul, Minnesota 55133-3427 (US); PARK, Jiyoung, Saint Paul, Minnesota 55133-3427 (US); MOLNAR, Attila, Saint Paul, Minnesota 55133-3427 (US)
(74) Representative: Mathys & Squire
(86) International application number: PCT/IB2018/052145
(87) International publication number: WO 2018/185615

(56) References cited:
- EP-A1- 2 704 239
- US-A- 5 342 494
- US-A1- 2011 223 523

## Description

### Cross Reference to Related Application

This application claims the benefit of U.S. Provisional Patent Application No. 62/480794, filed April 3, 2017.

### Background

Water electrolyzers are common electrochemical devices for producing ultra-pure (e.g., typically, at least 99.9% pure) hydrogen from pure water. In the case of proton exchange membrane (PEM) based water electrolyzers, hydrogen can be obtained at high pressure. These electrolyzers often contain membrane electrode assemblies (MEAs) similar to proton exchange membrane electrode assemblies for fuel cells. PEM based water electrolyzers, however, produce hydrogen at the cathode via a hydrogen evolution reaction (HER) and oxygen at the anode via an oxygen evolution reaction (OER). The designation of the electrodes as anode or cathode in an electrochemical device follows the IUPAC convention that the anode is the electrode at which the predominant reaction is oxidation (e.g., the H₂ oxidation electrode for a fuel cell, or the water oxidation/O₂ evolution reaction electrode for a water or CO₂ electrolyzer).

Higher operating pressures on the water electrolyzer cathode (e.g., even approaching 50 bar) create a situation known in the field as hydrogen crossover, where the hydrogen gas (H₂) crosses from the cathode where it is produced through the PEM, back to the anode. This situation creates both an efficiency loss and in some situations an undesired amount of H₂ mixing with the anode gas (O₂) (e.g., exceeds 4 vol. %, which is about the lower explosive limit (LEL)).

There is a desire to mitigate this crossover of hydrogen to the anode.

### Summary

The present invention provides a water electrolyzer according to claim 1, comprising:
a membrane having first and second opposed major surfaces and comprising at least one of metallic Pt or Pt oxide;
a cathode on the first major surface of the membrane, the cathode comprising a first catalyst consisting essentially of both metallic Pt and Pt oxide; and
an anode on the second major surface of the membrane, the anode comprising a second catalyst, wherein the second catalyst is a nanostructured thin film catalyst comprising at least 95 (in some embodiments, at least 96, 97, 98, or even at least 99) percent by weight of collectively metallic Ir and Ir oxide, calculated as elemental Ir, based on the total weight of the second catalyst (understood not to include any support, if any is present), wherein at least one of metallic Ir or Ir oxide is present.

In another aspect, the present invention provides a method of generating hydrogen and oxygen from water, the method comprising:
providing a water electrolyzer described herein;
providing water in contact with the anode; and
providing an electrical current with sufficient potential difference across the membrane to convert at least a portion of the water to hydrogen and oxygen on the cathode and anode, respectively.

### Brief Description of the Drawings

FIG. 1 is a schematic of an exemplary water electrolyzer described herein.
FIGS. 2A-2D are side views of various exemplary membrane configurations described herein.

### Detailed Description

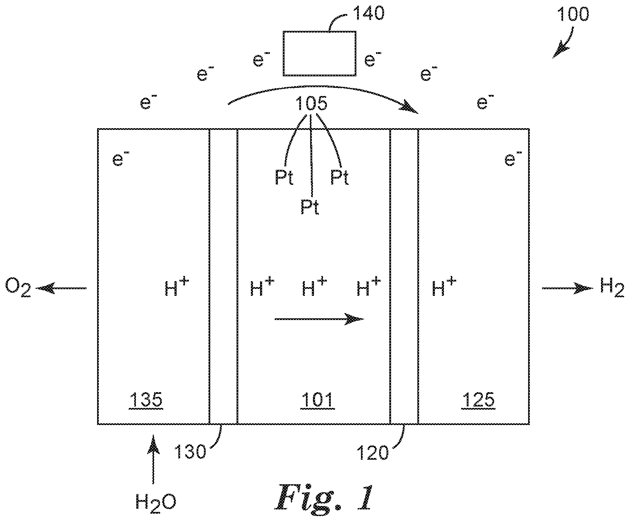

Single cell water electrolyzers are known, but water electrolyzers typically comprise a plurality (e.g., at least two) of cells that in turn comprise a membrane, cathode, and anode. Referring to FIG. 1, exemplary water electrolyzer cell 100 comprising membrane 101, cathode 120, and anode 130. Membrane 100 comprises platinum 105, in the form of at least one of metallic Pt or Pt oxide. Platinum 105 may be supported platinum. Cathode 120 has first catalyst consisting essentially of at least one of metallic Pt or Pt oxide (i.e., consists essentially of metallic Pt, consists essentially of Pt oxide, or consists essentially of both metallic Pt and Pt oxide). Anode 130 has second catalyst comprising at least 95 percent by weight of collectively metallic Ir and Ir oxide, calculated as elemental Ir, based on the total weight of the second catalyst, wherein at least one of metallic Ir or Ir oxide is present. As shown, cell 100 also includes optional first fluid transport layer (FTL) 135 adjacent anode 130, and optional second fluid transport layer 125 situated adjacent cathode 120. FTLs 125 and 135 can be referred to as diffuser/current collectors (DCCs) or gas diffusion layers (GDLs). In operation, water is introduced into the anode portion of cell 100, passing through first fluid transport layer 135 and over anode 130. Power source 140 applies an electrical current source on cell 100.

In some embodiments, membrane 101 is a proton exchange membrane (PEM) that preferentially permits hydrogen ions (solvated protons) to pass through the membrane to the cathode portion of the cell, thus conducting an electrical current through the membrane. The electrons cannot normally pass through the membrane and, instead, flow through an external electrical circuit in the form of electrical current.

The hydrogen ions (H⁺) combine with the electrons at cathode 120 to form hydrogen gas, and the hydrogen gas is collected through second fluid transport layer 125 situated adjacent cathode 120. Oxygen gas is collected at the anode of cell 100 via first fluid transport layer 135 situated adjacent anode 130.

Gas diffusion layer (GDL) 135 facilitates water and oxygen gas transport to and from the anode, respectively, and hydrogen ions (H⁺) and water (carried electro-osmotically through the PEM membrane with the solvated protons) transport from the anode through the membrane to the cathode, conducting electrical current. Also, some of the produced hydrogen gas transports through the membrane from the cathode to the anode by diffusion, resulting in undesired "hydrogen crossover." GDLs 125, 135 are both porous and electrically conductive, and on the cathode side are typically composed of carbon fibers. However, in order to avoid degradation of carbon at the high potentials of the anode, it is preferred to use a more corrosion resistant material, such as porous titanium, as the GDL on the anode. The GDL may also be called a fluid transport layer (FTL) or a diffuser/current collector (DCC). In some embodiments, the anode and cathode layers are applied to GDLs and the resulting catalyst-coated GDLs (also called CCBs, catalyst coating backings) are sandwiched with a polymer electrolyte such as a PEM to form a five-layer MEA. The five layers of such a five-layer MEA are, in order: anode GDL, anode layer, ion conducting membrane, cathode layer, and cathode GDL. The anode layer and cathode layer typically comprise an anode catalyst and a cathode catalyst, respectively. In other embodiments, the anode and cathode layers are applied to either side of the ion conducting membrane, and the resulting catalyst-coated membrane (CCM) is sandwiched between two GDLs (or FTLs) to form a five-layer MEA.

An ion conducting membrane used in a CCM or MEA described herein may comprise any suitable polymer electrolyte. Exemplary polymer electrolytes typically bear anionic functional groups bound to a common backbone, which are typically sulfonic acid groups but may also include carboxylic acid groups, imide groups, imide acid groups, amide groups, or other acidic functional groups. Anion conducting membranes comprising cationic functional groups bound to a common backbone are also possible, but are less commonly used. Exemplary polymer electrolytes are typically highly fluorinated and most typically perfluorinated (e.g., at least one of perfluorosulfonic acid and perfluorosulfonimide acid). Exemplary electrolytes include copolymers of tetrafluoroethylene and at least one fluorinated, acid-functional co-monomer. Typical polymer electrolytes include those available from DuPont Chemicals, Wilmington, DE, under the trade designation "NAFION;" Solvay, Brussels, Belgium, under the trade designation "AQUIVION;" and from Asahi Glass Co. Ltd., Tokyo, Japan, under the trade designation "FLEMION." The polymer electrolyte may be a copolymer of tetrafluoroethylene (TFE) and FSO₂-CF₂CF₂CF₂CF₂-O-CF=CF₂, described in U.S. Pat. Nos. 6,624,328 (Guerra) and 7,348,088 (Hamrock et al.), and U.S. Pub. No. 2004/0116742 (Guerra). The polymer typically has an equivalent weight (EW) up to 1200 (in some embodiments, up to 1100, 1000, 900, 825, 800, 725, or even up to 625).

The polymer can be formed into a membrane by any suitable method. The polymer is typically cast from a suspension. Any suitable casting method may be used, including bar coating, spray coating, slit coating, and brush coating. Alternately, the membrane may be formed from neat polymer in a melt process such as extrusion. After forming, the membrane may be annealed, typically at a temperature of at least 120°C (in some embodiments, at least 130°C, 150°C, or higher). The membrane typically has a thickness up to 250 micrometers (in some embodiments, up to 225 micrometers, 200 micrometers, 175 micrometers, 150 micrometers, 100 micrometers, or even up to 50 micrometers).

The polymer membrane can also include a support matrix consisting of a porous network of interlinked fibers that will provide the ion exchange polymer (ionomer) with additional mechanical strength to withstand the sometimes large pressure differentials across the membrane due to the high pressure of the cathode side during hydrogen evolution. The support matrix can be made of an expanded polytetrafluoroethylene (e.g., that available under the trade designation "TEFLON" from DuPont Chemicals, Wilmington, DE), or a partially fluorinated fibrous matrix that will be stable in the acidic environment of the ionomer.

In some embodiments, the membrane has a first proton conducting polymer reinforced with a nanofiber mat; wherein the nanofiber mat is made from a nanofiber comprising a fiber material selected from polymers and polymer blends; wherein the fiber material has a fiber material proton conductivity; wherein the first proton conducting polymer has a first proton conducting polymer conductivity; and wherein the fiber material proton conductivity is less than the first proton conducting polymer conductivity.

In some embodiments, the fiber material in the membrane may include highly fluorinated polymer, perfluorinated polymer, hydrocarbon polymer, or blends and combinations thereof. In some embodiments, the fiber material in the membrane may include a polymer suitable for electrospinning selected from the group consisting of polyvinylidene fluoride (PVDF), polysulfone (PSU), poly(ethersulfone) (PES), polyethylenimine (PEI), polybenzimidazole (PBI), polyphenylene oxide (PPO), polyether ether ketone (PEEK), polyphenyl ether (PPE), polyphenylene ether sulfone (PPES), poly ether ketone (PEK), blends, and combinations thereof. In some embodiments, the fiber in the membrane may be an electrospun nanofiber.

Typically, it is desirable that the membrane be free of any Ce or Mn (i.e., no greater than 0.001 mg/cm³ of either Ce or MN, calculated as elemental Ce and Mn, respectively).

Additional details for exemplary membranes can be found, for example, in U.S. Pat. Pub. Nos. 2008/0113242, 2002/0100725, and 2011/036935.

Optionally, the membrane is washed in acid (e.g., 1.0 molar nitric acid to remove any metal cation impurities, or nitric acid plus hydrogen peroxide to remove metal cation impurities and organic impurities, followed by rinsing in deionized water) prior to deposition or lamination of catalyst (including catalyst-bearing nanostructured whiskers) to remove cation impurities. Heating the washing bath (e.g., to 30°C, 40°C, 50°C, 60°C, 70°C, or even 80°C) may make the cleaning faster. Benefits of acid washing the membrane may depend on the particular membrane.

In making an MEA, GDLs may be applied to either side of a CCM. The GDLs may be applied by any suitable means. Suitable GDLs include those stable at the electrode potentials of use. For example, the cathode GDL can contain particulate carbon black or carbon fibers since it is operated at low potentials sufficient for adequate hydrogen evolution, whereas the anode GDL is typically made of Ti or some other material stable at the high potentials characteristic of oxygen evolution. Typically, the cathode GDL is a carbon fiber construction of woven or non-woven carbon fibers. Exemplary carbon fiber constructions include those available, for example, under the trade designation "TORAY" (carbon paper) from Toray, Japan; "SPECTRACARB" (carbon paper) from Spectracarb, Lawrence, MA; and "ZOLTEK" (carbon cloth) from Zoltek, St. Louis, MO, as well as from Mitsubishi Rayon Co., Japan and Freudenberg, Germany. The GDL may be coated or impregnated with various materials, including carbon particle coatings, hydrophilizing treatments, and hydrophobizing treatments such as coating with polytetrafluoroethylene (PTFE).

Typically, the electrolyzer anode GDL is metal foam or porous metal screen or mesh comprised, for example, of Pt, Ti, Ta, Nb, Zr, Hf, or a metal alloy that will not corrode (e.g., Ti-10V-5Zr) and yet will have adequate electrical conductivity (e.g., by sputter deposition or electroplating a layer of Pt onto the surface in the case of a Ti GDL) for the electrolyzer operation at the potentials of use above the thermodynamic potential for water oxidation at 1.23 V.

In use, MEAs described herein are typically sandwiched between two rigid plates, known as distribution plates, also known as end plates (or in case of a multi-cell stack, bipolar plates (BPPs)). Like the GDL, the distribution plates are electrically conductive and must be stable at the potentials of the electrode GDL against which it is placed. The distribution plate is typically made of materials such as carbon composite, metal, or coated or plated metals. As for the GDLs, the cathode plate of the electrolyzer can be any material common to use in fuel cells, whereas the anode plate of the electrolyzer must be fabricated of a material that will not corrode above at potentials of 1.23 volt (in some embodiments, up to 1.5 volt, 2.5 volts, or even higher) relative to the potential of a reversible hydrogen electrode (RHE). An exemplary coating for the anode plate comprises Ti-10V-5Zr. The distribution plate distributes reactant or product fluids to and from the MEA electrode surfaces, typically through at least one fluid-conducting channel engraved, milled, molded, or stamped in the surface(s) facing the MEA(s). These channels are sometimes designated a flow field. The distribution plate may distribute fluids to and from two consecutive MEAs in a stack, with one face directing water to and oxygen from the anode of the first MEA while the other face directs evolved hydrogen and water (that crosses over the membrane) away from the cathode of the next MEA. Alternately, the distribution plate may have channels on one side only, to distribute fluids to or from an MEA on only that side, in which case the distribution plate may be termed an "end plate."

Pt (i.e., at least one of metallic or Pt oxide) is typically incorporated into the membrane via addition of the Pt containing salts to the membrane (imbibing), followed by chemical reduction typically using NaBH₄ or H₂. Supported Pt can also be incorporated into the membrane via addition of the carbon-supported Pt, which has been pre-wetted with deionized water, to the liquid suspension of the ionomer, followed by casting a membrane from the resultant mixture.

In some embodiments, the at least one of metallic Pt or Pt oxide is collectively present in the membrane at a concentration in a range from 0.05 mg/cm³ to 100 mg/cm³ (in some embodiments, in a range from 0.1 mg/cm³ to 100 mg/cm³, 1 mg/cm³ to 75 mg/cm³, or even 5 mg/cm³ to 50 mg/cm³).

In some embodiments, the at least one of metallic Pt or Pt oxide in the membrane is distributed throughout the membrane. In some embodiments, the membrane has a thickness extending between the first and second major surfaces, and first, second, and third regions equally spaced across the thickness, wherein the first region is the closest region to the first major surface, wherein the second region is the closest region to the second major surface, wherein the third region is located between the first and second regions, wherein the first and third regions are each essentially free of both metallic Pt and Pt oxide (i.e., no greater than 0.001 mg/cm³, calculated as elemental Pt), and wherein the second region comprises the at least one of metallic Pt or Pt oxide in the membrane. In some embodiments, the at least one of metallic Pt or Pt oxide is distributed throughout the second region.

In some embodiments, the membrane has a thickness extending between the first and second major surfaces, wherein the thickness has a midpoint between the first and second major surfaces, a first region between the first major surface and the midpoint, and a second region between the second major surface and the midpoint, and wherein the first region comprises the at least one of metallic Pt or Pt oxide in the membrane and the second region is essentially free of both metallic Pt and Pt oxide. In some embodiments, the at least one of metallic Pt or Pt oxide is distributed throughout the first region.

In some embodiments, the membrane has a thickness extending between the first and second major surfaces, wherein the thickness has a midpoint between the first and second major surfaces, a first region between the first major surface and the midpoint, and a second region between the second major surface and the midpoint, and wherein the first region is essentially free of both metallic Pt and Pt oxide and the second region comprises the at least one of metallic Pt or Pt oxide in the membrane. In some embodiments, the at least one of metallic Pt or Pt oxide is distributed throughout the second region.

In some embodiments, the membrane has a thickness extending between the first and second major surfaces, wherein the thickness has, in order, a first, second, third, and fourth equally spaced regions, and wherein at least one of the first, second, third, or fourth regions comprise the at least one of metallic Pt or Pt oxide in the membrane. In some embodiments, one of said regions comprises at least one of metallic Pt or Pt oxide, and the remaining three regions are essentially free of both metallic Pt and Pt oxide. In some embodiments, two of said regions comprise at least one of metallic Pt or Pt oxide, and the remaining two regions are essentially free of both metallic Pt and Pt oxide. In some embodiments, three of said regions comprise at least one of metallic Pt or Pt oxide, and the remaining one region is essentially free of both metallic Pt and Pt oxide. In some embodiments, the at least one of metallic Pt or Pt oxide present in a region is distributed throughout the respective region.

In some embodiments, the membrane has a thickness extending between the first and second major surfaces, wherein the thickness has a midpoint between the first and second major surfaces, wherein the at least one of metallic Pt or Pt oxide in the membrane is present in and only within 0.05 micrometer to 0.5 micrometer from the midpoint toward both the first and second major surfaces of the membrane.

In some embodiments, at least a portion of the at least one of metallic Pt or Pt oxide in the membrane is present on a support (e.g., a carbon support). Carbon supports include at least one of carbon spheres or carbon particles (in some embodiments, having an aspect ratio in a range from 1:1 to 2:1, or even 1:1 to 5:1). Exemplary carbon spheres are available, for example, from Cabot Corporation, Billerica, MA, under the trade designations "VULCAN XC72" and "BLACK PEARLS BP2000." Exemplary carbon supports already coated with Pt catalysts are available, for example, from Tanaka Kikinzoku Kogyo K. K., Hiratsuka, Kanagawa, Japan, under the trade designations "TEC10L50E," "TEC10BA50E," "TEC10EA50E," "TEC10VA50E," "TEC10EA20E-HT," and "TEC10VA20E."

Carbon supports also include at least one of carbon nanotubes (e.g., single wall carbon nanotubes (SWNT) (sometimes referred to as "buckytubes"), double walled carbon nanotubes (DWNT), or multiple wall carbon nanotubes (MWNT)). Carbon nanotubes are available, for example, from Showa Denko Carbon Sales, Inc., Ridgeville, SC, under the trade designation "VGCF-H."

Carbon supports include carbon fullerenes (sometimes referred to as "buckyballs"). Carbon fullerenes are available, for example, from Frontier Carbon Corporation, Chiyoda-ku, Tokyo, Japan, under the trade designation "NANOM."

Carbon supports include at least one of carbon nanofibers or carbon microfibers. Carbon nanofibers and carbon microfibers are available, for example, from Pyrograf Products, Inc., Cedarville, OH, under the trade designation "PYROGRAF-III."

In some embodiments, the supports include nanostructured whiskers (e.g., perylene red whiskers). Nanostructured whiskers can be provided by techniques known in the art, including those described in U.S. Pat. Nos. 4,812,352 (Debe), 5,039,561 (Debe), 5,338,430 (Parsonage et al.), 6,136,412 (Spiewak et al.), and 7,419,741 (Vernstrom et al.). In general, nanostructured whiskers can be provided, for example, by vacuum depositing (e.g., by sublimation) a layer of organic or inorganic material such as perylene red onto a substrate (e.g., a microstructured catalyst transfer polymer), and then converting the perylene red pigment into nanostructured whiskers by thermal annealing. Typically, the vacuum deposition steps are carried out at total pressures at or below about 10⁻³ Torr or 0.1 Pascal. Exemplary microstructures are made by thermal sublimation and vacuum annealing of the organic pigment "perylene red," C.I. Pigment Red 149 (i.e., N,N'-di(3,5-xylyl)perylene-3,4:9,10-bis(dicarboximide)). Methods for making organic nanostructured layers are disclosed, for example, in Materials Science and Engineering, A158 (1992), pp. 1-6; J. Vac. Sci. Technol. A, 5 (4), July/August, 1987, pp. 1914-16; J. Vac. Sci. Technol. A, 6, (3), May/August, 1988, pp. 1907-11; Thin Solid Films, 186, 1990, pp. 327-47; J. Mat. Sci., 25, 1990, pp. 5257-68; Rapidly Quenched Metals, Proc. of the Fifth Int. Conf. on Rapidly Quenched Metals, Wurzburg, Germany (Sep. 3-7, 1984), S. Steeb et al., eds., Elsevier Science Publishers B.V., New York, (1985), pp. 1117-24; Photo. Sci. and Eng., 24, (4), July/August, 1980, pp. 211-16; and U.S. Pat. Nos. 4,340,276 (Maffitt et al.) and 4,568,598 (Bilkadi et al.). Properties of catalyst layers using carbon nanotube arrays are disclosed in the article "High Dispersion and Electrocatalytic Properties of Platinum on Well-Aligned Carbon Nanotube Arrays," Carbon, 42, (2004), 191-197. Properties of catalyst layers using grassy or bristled silicon are disclosed in U.S. Pat. App. Pub. No. 2004/0048466 A1 (Gore et al.).

Vacuum deposition may be carried out in any suitable apparatus (see, e.g., U.S. Pat. Nos. 5,338,430 (Parsonage et al.), 5,879,827 (Debe et al.), 5,879,828 (Debe et al.), 6,040,077 (Debe et al.), and 6,319,293 (Debe et al.), and U.S. Pat. App. Pub. No. 2002/0004453 A1 (Haugen et al.). One exemplary apparatus is depicted schematically in FIG. 4A of U.S. Pat. No. 5,338,430 (Parsonage et al.), and discussed in the accompanying text, wherein the substrate is mounted on a drum that is then rotated over a sublimation or evaporation source for depositing the organic precursor (e.g., perylene red pigment) in order to form the nanostructured whiskers.

Typically, the nominal thickness of deposited perylene red pigment is in a range from about 50 nm to 500 nm. Typically, the whiskers have an average cross-sectional dimension in a range from 20 nm to 60 nm and an average length in a range from 0.3 micrometer to 3 micrometers.

In some embodiments, the whiskers are attached to a backing. Exemplary backings comprise polyimide, nylon, metal foils, or other material that can withstand the thermal annealing temperature up to 300°C. In some embodiments, the backing has an average thickness in a range from 25 micrometers to 125 micrometers.

In some embodiments, the backing has a microstructure on at least one of its surfaces. In some embodiments, the microstructure is comprised of substantially uniformly shaped and sized features at least three (in some embodiments, at least four, five, ten or more) times the average size of the nanostructured whiskers. The shapes of the microstructures can, for example, be V-shaped grooves and peaks (see, e.g., U.S. Pat. No. 6,136,412 (Spiewak al.). or pyramids (see, e.g., U.S. Pat. No. 7,901,829 (Debe et al.). In some embodiments, some fraction of the features of the microstructures extend above the average or majority of the microstructured peaks in a periodic fashion, such as every 31^{st} V-groove peak is 25% or 50% or even 100% taller than those on either side of it. In some embodiments, this fraction of features that extend above the majority of the microstructured peaks can be up to 10% (in some embodiments up to 3%, 2%, or even up to 1%). Use of the occasional taller microstructure features may facilitate protecting the uniformly smaller microstructure peaks when the coated substrate moves over the surfaces of rollers in a roll-to-roll coating operation. The occasional taller feature touches the surface of the roller rather than the peaks of the smaller microstructures and so much less of the nanostructured material or whiskers is likely to be scraped or otherwise disturbed as the substrate moves through the coating process. In some embodiments, the nanostructured whiskers are at least partially embedded in the ion conducting membrane. In some embodiments, the microstructure features are substantially smaller than half the thickness of the membrane that the catalyst will be transferred to in making a membrane electrode assembly (MEA). This is so that during the catalyst transfer process, the taller microstructure features do not penetrate through the membrane where they may overlap the electrode on the opposite side of the membrane. In some embodiments, the tallest microstructure features are less than 1/3^{rd} or 1/4^{th} of the membrane thickness. For the thinnest ion exchange membranes (e.g., about 10 to 15 micrometers in thickness), it may be desirable to have a substrate with microstructured features no larger than about 3 to 4.5 micrometers tall. The steepness of the sides of the V-shaped or other microstructured features or the included angles between adjacent features in some embodiments may be desirable to be on the order of 90° for ease in catalyst transfer during a lamination-transfer process and in order to have a gain in surface area of the electrode that comes from the square root of two (1.414) surface area of the microstructured layer relative to the planar geometric surface of the substrate backing.

In some embodiments, the supports include tin oxide. Such tin oxide is available as already catalyzed Pt/SnO₂ in the form of finely ground particles for example, from Tanaka Kikinzoku Kogyo K. K., Hiratsuka, Kanagawa, Japan, under the trade designation "TEC10(SnO₂/A)10E" and "TEC10(SnO₂/A)30E."

In some embodiments, the supports include clay. These clays can take the form of particles or platelets and may be synthetic or naturally occurring layered silicates. Such clay is available, for example, from BYK Additives and Instruments, GmbH, Wesel, Germany, under the trade designation "LAPONITE RD."

Platinum can be sputtered onto the support, for example, using the general teachings in U.S. Pat. Nos. 5,879,827 (Debe et al.), 6,040,077 (Debe et al.), and 7,419,741 (Vernstrom et al.), and U.S. Pat. Pub. No. 2014/0246304 A1 (Debe et al.). In some embodiments, sputtering is conducted at least in part in an atmosphere comprising argon that is flowing into the sputtering chamber at a rate of at least 120 sccm (i.e., standard cubic centimeters per minute).

The anode and cathode can be provided by techniques known in the art, including those described in PCT Pub. No. WO 2016/191057 A1, published December 1, 2016. In general, the anode and cathode are each comprised of layers.

In some embodiments, the second catalyst consists essentially of at least one of metallic Ir or Ir oxide (i.e., consists essentially of metallic Ir, consists essentially of Ir oxide, or consists essentially of both metallic Ir and Ir oxide). In some embodiments, the second catalyst further comprises at least one of metallic Pt or Pt oxide. In some embodiments, the second catalyst consists essentially of at least one of metallic Pt or Pt oxide and at least one of metallic Ir or Ir oxide.

For catalysts comprising or consisting essentially of at least one of metallic Ir or Ir oxide and at least one of metallic Pt or Pt oxide, the iridium and platinum, calculated as elemental Pt and Ir, respectively, have a collective weight ratio of at least 20:1 (in some embodiments, at least 50:1, 100:1, 500:1, 1000:1, 5,000:1, or even at least 10,000:1; in some embodiments, in a range from 20:1 to 10,000:1, 20:1 to 5,000:1, 20:1 to 1000:1, 20:1 to 500:1, 20:1 to 100:1, or even 20:1 to 50:1) Ir to Pt.

In some embodiments, the at least one of metallic Ir or Ir oxide of the second catalyst collectively has an areal density of at least 0.01 mg/cm² (in some embodiments, at least 0.05 mg/cm², 0.1 mg/cm², 0.25 mg/cm², 0.5 mg/cm², 1 mg/cm², or even at least 5 mg/cm²; in some embodiments, in a range from 0.01 mg/cm² to 5 mg/cm², 0.05 mg/cm² to 2.5 mg/cm², 0.1 mg/cm² to 1 mg/cm², or even 0.25 mg/cm² to 0.75 mg/cm²).

Typically, the planar equivalent thickness of a catalyst layer is in a range from 0.5 nm to 5 nm. "Planar equivalent thickness" means, in regard to a layer distributed on a surface, which may be distributed unevenly, and which surface may be an uneven surface (such as a layer of snow distributed across a landscape, or a layer of atoms distributed in a process of vacuum deposition), a thickness calculated on the assumption that the total mass of the layer was spread evenly over a plane covering the same projected area as the surface (noting that the projected area covered by the surface is less than or equal to the total surface area of the surface, once uneven features and convolutions are ignored).

In some embodiments, the anode catalyst comprises up to 1 mg/cm² (in some embodiments, up to 0.25 mg/cm², or even up to 0.025 mg/cm²) of the at least one of metallic Ir or Ir oxide, calculated as elemental Ir. In some embodiments, the cathode catalyst comprises up to 1 mg/cm² (in some embodiments, up to 0.25 mg/cm², or even up to 0.025 mg/cm²) of the at least one of metallic Pt or Pt oxide, calculated as elemental Pt. Typically, the catalyst is a continuous layer on each whisker and may form a bridge to adjacent whiskers.

In some embodiments where catalyst is coated on nanostructured whiskers (including perylene red nanostructured whiskers), the catalyst is coated in-line, in a vacuum, immediately following the nanostructured whisker growth step on the microstructured substrate. This may be a more cost-effective process so that the nanostructured whisker coated substrate does not need to be re-inserted into the vacuum for catalyst coating at another time or place. If the Ir catalyst coating is done with a single target, it may be desirable that the coating layer be applied in a single step onto the nanostructured whiskers so that the heat of condensation of the catalyst coating heats the Ir, O, etc. atoms and substrate surface sufficiently to provide enough surface mobility that the atoms are well mixed and form thermodynamically stable domains. If the Pt catalyst coating is done with a single target, it may be desirable that the coating layer be applied in a single step onto the nanostructured whiskers so that the heat of condensation of the catalyst coating heats the Pt, O, etc. atoms and substrate surface sufficiently to provide enough surface mobility that the atoms are well mixed and form thermodynamically stable domains. Alternatively, for perylene red nanostructured whiskers, the substrate can also be provided hot or heated to facilitate this atomic mobility, such as by having the nanostructured whisker coated substrate exit the perylene red annealing oven immediately prior to the catalyst sputter deposition step.

It will be understood by one skilled in the art that the crystalline and morphological structure of a catalyst described herein, including the presence, absence, or size of alloys, amorphous zones, crystalline zones of one or a variety of structural types, and the like, may be highly dependent upon process and manufacturing conditions, particularly when three or more elements are combined.

Water electrolyzers described herein are useful for generating hydrogen and oxygen from water, wherein water is in contact with the anode, and an electrical current is provided through the membrane with sufficient potential difference across the membrane to convert at least a portion of the water to hydrogen and oxygen on the cathode and anode, respectively.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Examples

Materials for preparing the Examples include those in Table 1, below.

**Table 1**

| Abbreviation or Trade Designation | Source |
|---|---|
| "PR149" | Perylene red pigment (i.e., N,N'-di(3,5-xylyl)perylene-3,4:9,10-bis(dicarboximide)), obtained under the trade designation "C.I. PIGMENT RED 149," also known as "PR149," from Clariant, Charlotte, NC. |
| "NAFION 117" | A polymeric perfluorosulfonic acid (PFSA) cation exchange membrane, obtained under the trade designation "NAFION 117" from DuPont, Wilmington, DE. |
| "3M825EW MEMBRANE" | 825 g/mol equivalent weight polymeric perfluorosulfonic acid proton exchange membrane (PEM), obtained under the trade designation "3M825EW MEMBRANE" from 3M Company, St. Paul, MN. |
| "3M825EW POWDER" | 825 g/mol equivalent weight polymeric perfluorosulfonic acid ion exchange resin, obtained under the trade designation "3M825EW POWDER" from 3M Company. |
| "3M825EW SOLUTION" | 825 g/mol equivalent weight polymeric perfluorosulfonic acid ion exchange resin dispersion (34 wt.% in a 75:25 mix of ethanol and water), obtained under the trade designation "3M825EW SOLUTION" from 3M Company. |
| "LAPONITE RD" | Clay particles obtained under the trade designation "LAPONITE RD" from BYK Additives, Inc., Wesel, Germany. |
| "Ir-NSTF" | 0.5 mg/cm² iridium/iridium oxide nanostructured thin film (NSTF) catalyst supported on perylene red whiskers, prepared as described below under the heading "Preparation of Nanostructured Thin Film (NSTF) Catalyst." |
| "Pt-NSTF" | 0.25 mg/cm² nanostructured thin film (NSTF) catalyst supported on perylene red whiskers, prepared as described below under the heading "Preparation of Nanostructured Thin Film (NSTF) Catalyst." |
| "Pt-PRWF" | 50 micrograms/cm² Pt-NSTF perylene red whisker fragments, prepared as described below in Example 2. |
| "SnO₂10E" | Tin oxide supported platinum catalyst, obtained under the trade designation "TEC10(SnO₂/A)10E" from Tanaka Kikinzoku Kogyo K. K., Hiratsuka, Kanagawa, Japan. |
| "SnO₂30E" | Tin oxide supported platinum catalyst, obtained under the trade designation "TEC10(SnO₂/A)30E" from Tanaka Kikinzoku Kogyo K. K., Hiratsuka, Kanagawa, Japan. |
| "F50E" | Carbon-supported platinum catalyst, obtained under the trade designation "TEC10F50E" from Tanaka Kikinzoku Kogyo K. K. |
| BA50E" | Carbon-supported platinum catalyst, obtained under the trade designation "TEC10BA50E" from Tanaka Kikinzoku Kogyo K. K. |
| "EA50E" | Carbon-supported platinum catalyst, obtained under the trade designation "TEC10EA50E" from Tanaka Kikinzoku Kogyo K. K. |
| "VA50E" | Carbon-supported platinum catalyst, obtained under the trade designation "TEC10VA50E" from Tanaka Kikinzoku Kogyo K. K. |
| EA20E" | Carbon-supported platinum catalyst, obtained under the trade designation "TEC10EA20E-HT" from Tanaka Kikinzoku Kogyo K. K. |
| "VA20E | Carbon-supported platinum catalyst, obtained under the trade designation "TEC 10VA20E" from Tanaka Kikinzoku Kogyo K. K. |
| "KAPTON" | Polyimide film, obtained under the trade designation "KAPTON" from DuPont, Wilmington, DE. |

### Preparation of Nanostructured Whiskers

Nanostructured whiskers were prepared by thermally annealing a layer of perylene red pigment (PR 149), which was sublimation vacuum coated onto microstructured catalyst transfer polymer substrates (MCTS) with a nominal thickness of 200 nm, as described in detail in U.S. Pat. No. 4,812,352 (Debe).

A roll-good web of the MCTS (made on a polyimide film ("KAPTON")) was used as the substrate on which the PR149 was deposited. The MCTS substrate surface had V-shaped features with about 3 micrometer tall peaks, spaced 6 micrometers apart. A nominally 100 nm thick layer of Cr was then sputter deposited onto the MCTS surface using a DC magnetron planar sputtering target and typical background pressures of Ar and target powers known to those skilled in the art sufficient to deposit the Cr in a single pass of the MCTS web under the target at the desired web speed.

The Cr coated MCTS web then continued over a sublimation source containing the perylene red pigment (PR 149). The perylene red pigment (PR 149) was heated to a controlled temperature near 500°C so as to generate sufficient vapor pressure flux to deposit 0.022 mg/cm², or an approximately 220 nm thick layer of the perylene red pigment (PR 149) in a single pass of the web over the sublimation source. The mass or thickness deposition rate of the sublimation can be measured in any suitable fashion known to those skilled in the art, including optical methods sensitive to film thickness, or quartz crystal oscillator devices sensitive to mass. The perylene red pigment (PR 149) coating was then converted to the whisker phase by thermal annealing, as described in detail in U.S. Pat. No. 5,039,561 (Debe). by passing the perylene red pigment (PR 149) coated web through a vacuum having a temperature distribution sufficient to convert the perylene red pigment (PR 149) as-deposited layer into a layer of oriented crystalline whiskers at the desired web speed, such that the whisker layer has an average whisker areal number density of 68 whiskers per square micrometer, determined from scanning electron microscopy (SEM) images, with an average length of 0.6 micrometer.

### Preparation of Nanostructured Thin Film (NSTF) Catalyst

Nanostructured thin film (NSTF) Ir-based catalyst was prepared by sputter coating Ir catalyst films onto the layer of nanostructured whiskers (prepared as described above under the heading "Preparation of Nanostructured Whiskers").

Nanostructured thin film (NSTF) catalyst layers were prepared by sputter coating catalyst films using a DC-magnetron sputtering process onto the layer of nanostructured whiskers. A roll-good of nanostructured whiskers on MCTS substrate were loaded into a vacuum sputter deposition system similar to that described in FIG. 4A of U.S. Pat. No. 5,338,430 (Parsonage et al.), but equipped with additional capability to allow coatings on roll-good substrate webs. The coatings were sputter deposited by using ultra high purity Ar as the sputtering gas at approximately 5mTorr pressure. Ir-NSTF catalyst layers were deposited onto the roll-good by first exposing all sections of the roll-good substrate to an energized 5 inch x 15 inch (13 cm x 38 cm) planar Ir sputtering target (obtained from Materion, Clifton, NJ), resulting in the deposition of Ir onto the substrate. The magnetron sputtering target deposition rate and web speed were controlled to give the desired areal loading of Ir on the substrate. The DC magnetron sputtering target deposition rate and web speed were measured by standard methods known to those skilled in the art. The substrate was repeatedly exposed to the energized Ir sputtering target, resulting in additional deposition of Ir onto the substrate, until the desired Ir areal loading was obtained. An analogous process was used for formation of Pt-NSTF catalyst layers, but a pure 5 inch x 15 inch (13 cm x 38 cm) planar Pt sputter target (obtained from Materion, Clifton, NJ) was used in place of Ir.

### Preparation of Catalyst-Coated Membrane (CCM)

A catalyst-coated-membrane (CCM) was made by transferring the catalyst coated whiskers described above onto both surfaces (full CCM) of the proton exchange membrane (PEM) ("NAFION 117") using the processes as described in detail in U.S. Pat. No. 5,879,827 (Debe et al.). A Pt-NSTF catalyst layer was laminated to one side (intended to become the cathode side) of the PEM, and an Ir-NSTF catalyst layer was laminated to the other (anode) side of the PEM. The catalyst transfer was accomplished by hot roll lamination of the NSTF catalysts onto the PEM: the hot roll temperatures were 350°F (177°C) and the gas line pressure fed to force laminator rolls together at the nip ranged from 150 psi to180 psi (1.03 MPa to 1.24 MPa). The catalyst coated MCTSs were precut into 13.5 cm x 13.5 cm square shapes and sandwiched onto (one or) both side(s) of a larger square of PEM. The PEM with catalyst coated MCTS on one or both side(s), was placed between 2 mil (51 micrometer) thick polyimide film and then placed, paper on the outside, prior to passing the stacked assembly through the nip of the hot roll laminator at a speed of 1.2 ft./min. (37 cm/min.). Immediately after passing through the nip, while the assembly was still warm, the layers of polyimide and paper were quickly removed and the Cr-coated MCTS substrates were peeled off the CCM by hand, leaving the catalyst coated whiskers stuck to the PEM surface(s).

### Full CCM Test

The full CCM fabricated as described above was tested in an H₂/O₂ electrolyzer single cell. The full CCM was installed with appropriate gas diffusion layers directly into a 50 cm² single fuel cell test station (obtained under the trade designation "50SCH" from Fuel Cell Technologies, Albuquerque, NM), with quad serpentine flow fields. The normal graphite flow field block on the anode side was replaced with a Pt plated Ti flow field block of the same dimensions and flow field design (obtained from Giner, Inc., Auburndale, MA) to withstand the high anode potentials during electrolyzer operation. Purified water with a resistivity of 18 Mohms was supplied to the anode at 75 mL/min. A potentiostat (obtained under the trade designation "VMP-3," Model VMP-3 from Bio-Logic Science Instruments SAS, Seyssinet-Pariset, France) coupled with a 100A/5V booster (obtained under the trade designation "VMP-300," from Bio-Logic Science Instruments SAS) was connected to the cell and was used to control the applied cell voltage or current density.

The anode output was connected to a gas chromatograph (obtained under the trade designation "MICRO490," Model 490 Micro GC from Agilent, Santa Clara, CA) for analysis of the output gas for hydrogen content. All tests were carried out at a temperature of 80°C with deionized water (18 MΩ cm) flowing at a rate of 75 mL/min. to the anode. The gas composition at the anode compartment was measured using gas chromatography. Under ambient pressure condition (i.e., 1 bar at the cathode compartment and 1 bar at the anode compartment), the level of H₂ crossover through each membrane to the anode was measured by measuring the mole percent of H₂ in O₂ at 80°C, varying current densities ranging from 2.0 to 0.05 A/cm².

### Comparative Example A (CE A)

A catalyst-coated membrane (CCM) for a water electrolyzer was prepared using a 183-micrometer thick ion conducting membrane ("NAFION 117"). The CCM was prepared by hot roll laminating the membrane to a platinum-based hydrogen evolution reaction (HER) cathode catalyst layer and an iridium/iridium oxide based oxygen evolution reaction (OER) anode catalyst layer. These catalyst layers comprised nanostructured thin film (NSTF) catalysts, which were prepared as described below under the heading "Preparation of Nanostructured Thin Film (NSTF) Catalyst."

The resulting CCM was installed in a small single cell water electrolyzer and tested for hydrogen crossover through the membrane from the hydrogen-producing cathode to the oxygen-generating anode compartment by analyzing the effluent of the anode compartment with a gas chromatograph adapted to detect hydrogen gas. The test is further described under the heading "Full CCM Test."

The level of hydrogen crossover detected was 0.52 mol.% H₂ in O₂ when the cell was operated at a cathode (hydrogen side) pressure of 1 bar (0.1 MPa) and 1.79 mol.% H₂ in O₂ when the cell was operated at a cathode (hydrogen side) pressure of 30-bar (3 MPa). For efficiency, for example, it is often desired to operate electrolyzer cells at a hydrogen side pressure of 30 bar while staying far below the explosion limit of 4 mol.% H₂ in O₂. The average values of the mole percent of H₂ measured at 0.1 A/cm² over one hour are listed in Table 2, below.

**Table 2**

| | Description Pt/Support type; Pt loading (mg/cm³); Total membrane thickness (micrometers) | Mol.% H₂ in O₂ | |
|---|---|---|---|
| | | at 1 bar (0.1 MPa) | at 30 bars (3 MPa) |
| CE A | "NAFION 117" (183) | 0.52 | 1.79 |
| CE B | "3M825EW" Double layer (100) | 0.81 | > 2.00 |
| CE C | "3M825EW" Triple layer (125) | 0.356 | - |
| CED | "3M825EW" Triple layer (150) | 0.349 | - |
| CEE | "3M825EW," clay interlayer (<110) | 0.663 | - |
| Example 1 | 2.5 wt% Pt on Clay- -Triple layer (<110) | 0.066 | - |
| Example 2 | "Pt-PRWF"- -Triple layer (143) | 0.003 | - |
| Example 3 | "Pt-PRWF"- -Triple layer (125) | 0.028 | - |
| Example 4 | "Pt-PRWF"- -Triple layer (112) | 0.011 | - |
| Example 5 | "SnO₂30E"-4-Triple layer (150) | 0.002 | - |
| Example 6 | "SnO₂30E"-12-Double layer (100) | 0.001 | - |
| Example 7 | "Pt-PRWF"- -Double layer (125) | 0.048 | - |
| Example 8 | "Pt-PRWF"- -Single layer (43) | 0.012 | - |
| Example 9 | "SnO₂10E"-50-Single layer (100) | < 10 ppm | - |
| Example 10 | "SnO₂10E"-25-Single layer (100) | < 10 ppm | - |
| Example 11 | "SnOa30E"-50-Single layer (100) | < 10 ppm | - |
| Example 12 | "SnOa30E"-25-Single layer (100) | < 10 ppm | - |
| Example 13 | "BA50E"-50-Single layer (100) | < 10 ppm | 0.18 |
| Example 14 | "BA50E"-12-Single layer (100) | 0.004 | - |
| Example 15 | "BA50E"-6-Double layer (100) | 0.032 | - |
| Example 16 | "EA50E"-50-Single layer (100) | - | 0.24 |
| Example 17 | "EA50E" -25-Double layer (100) | - | < 10 ppm |
| Example 18 | "EA50E"-12-Double layer (100) | - | < 10 ppm |
| Example 19 | "EA50E"-6-Double layer (100) | 0.019 | - |
| Example 20 | "EA20E"-25-Double layer (100) | 0.01 | - |
| Example 21 | "EA20E"-25-Single layer (100) | < 10 ppm | - |
| Example 22 | "EA20E"-12-Double layer (100) | 0.002 | - |
| Example 23 | "EA20E"-12-Single layer (100) | < 10 ppm | - |
| Example 24 | "F50E"-6-Double layer (100) | 0.019 | - |
| Example 25 | "VA50E"-6-Double layer (100) | 0.037 | - |
| Example 26 | "VA20E"-6-Double layer (100) | 0.01 | - |
| Example 27 | "EA20E"-17-Triple layer (150) | 0.003 | |

### Comparative Example B (CE B)

A full CCM was prepared and tested as in Comparative Example A, except that the membrane was made using two 50-micrometer thick 825 g/mol equivalent weight polymeric perfluorosulfonic acid proton exchange membranes ("3M825EW MEMBRANE") that were laminated together. The two membranes were combined into a single membrane through hot roll lamination (laminator temperature, 350°F (177°C); applied pressure, 150 psi (1 MPa); and roller speed: 0.5 feet per minute (2.54 mm/second)).

The values of the mole percent of H₂ measured at 0.1 A/cm² are listed in Table 2, above.

### Comparative Example C (CE C)

A full CCM was prepared and tested as in Comparative Example B, except that a 125-micrometer thick membrane was used. The membrane was made by hot roll laminating two 50-micrometer and one 25-micrometer 825 g/mol equivalent weight polymeric perfluorosulfonic acid proton exchange membranes ("3M825EW MEMBRANE").

The values of the mole percent of H₂ measured at 0.1 A/cm² are listed in Table 2, above.

### Comparative Example D (CE D)

A full CCM was prepared and tested as in Comparative Example B, except that a 150-micrometer thick membrane was used. The membrane was made by hot roll laminating three 50 micrometer thick 825 g/mol equivalent weight polymeric perfluorosulfonic acid proton exchange membranes ("3M825EW MEMBRANE").

The values of the mole percent of H₂ measured at 0.1 A/cm² are listed in Table 2, above.

### Comparative Example E (CE E)

Comparative Example E was prepared by making a triple-layer composite containing a thin, platinum-free, clay-containing central layer. A CCM was prepared using two 50-micrometer thick 825 g/mol equivalent weight polymeric perfluorosulfonic acid proton exchange membranes (PEMs) ("3M825EW MEMBRANE") with a composite layer of perfluorosulfonic acid (PFSA) ionomer ("3M825EW") and clay ("LAPONITE RD") sandwiched between the PEMs. The clay layer was made by coating onto a 2 mil (51 micrometer) thick polyimide film ("KAPTON") a mixture of 1.00 gram of a 2.5 wt.% ethanol suspension of clay ("LAPONITE RD") with 10.5 grams of PFSA ionomer ("3M825EW SOLUTION"). The clay layer was then laminated first to one of the 50-micrometer thick PFSA membranes, and the "KAPTON" liner was removed. Laminations were done on a heated roller laminator with 150 psi (1 MPa) applied pressure, at 0.5 feet per minute (fpm) (2.54 mm per second minute), and at 350°F (177°C). Finally, the combined membrane was laminated to the second 50 micrometer thick PFSA membrane using the same laminating conditions, with the clay layer facing the second membrane.

The values of the mole percent of H₂ measured at 0.1 A/cm² are listed in Table 2, above.

### Example 1

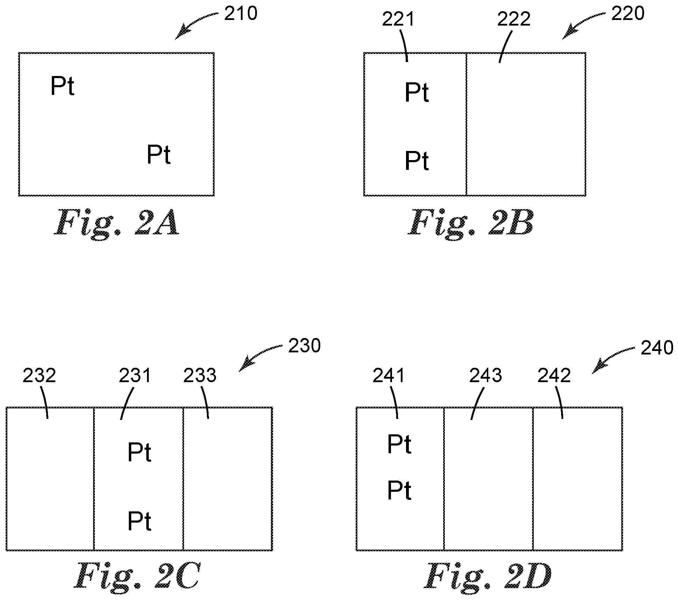

A full CCM was prepared and tested as described in Comparative Example E, except that the membrane was made using two 50-micrometer thick 825 g/mol equivalent weight polymeric perfluorosulfonic acid proton exchange membranes ("3M825EW MEMBRANES") with a composite layer of PFSA ionomer ("3M825EW SOLUTION") and clay ("LAPONITE RD") which had been sputter coated with 2.5 wt.% platinum, sandwiched between the PEMs. The three-layer construction of this membrane is shown in Table 3, below, following the layer labeling convention of FIG. 2, in which platinum-bearing Layer 1 corresponds to: single layer membrane 210 in FIG. 2A; membrane layer 221 in double-layer membrane 220 of FIG. 2B; central layer 231 in membrane 230 of FIG. 2C (for all triple layer membranes except Example 27); and (anode) side layer 241 in triple layer membrane 240 of FIG. 2D for Example 27. Layer 2 of Table 3 corresponds to layers 222, 232, and 242 in FIGS. 2B-2D, respectively. Layer 3 in Table 3 corresponds to membrane layers 233 and 243 in FIGS. 2C and 2D, respectively.

**Table 3**

| | Layer 1 Formulation | | | | | | Membrane | | | | | |
|---|---|---|---|---|---|---|---|---|---|---|---|---|
| | PFSA solution | | | Pt/Support suspension | | | Layer 1 | | | Layer 2 | | Layer 3 |
| | PFSA Solution Type | grams | | Pt/Support Type | grams | | Wet film thickness, micrometers | Dried film thickness, micrometers | | "PFSA 825EW," micrometers | | "PFSA 825EW," micrometers |
| Example 1 | 34 wt.% | 10.5 | | 2.5 wt.% Pt on Clay | 1.00 | | 50 | <10 | | 50 | | 50 |
| Example 2 | 34 wt.% | 28.83 | | "Pt-PRWF" | 1.65 | | 381 | 43 | | 50 | | 50 |
| Example 3 | 34 wt.% | 28.83 | | "Pt-PRWF" | 1.65 | | 254 | 25 | | 50 | | 50 |
| Example 4 | 34 wt.% | 28.83 | | "Pt-PRWF" | 1.65 | | 127 | 12 | | 50 | | 50 |
| Example 5 | 42 wt.% | 18.75 | | "SnO₂30E" | 1.87 | | 381 | 50 | | 50 | | 50 |
| Example 6 | 42 wt.% | 18.75 | | "SnO₂30E" | 3.74 | | 381 | 50 | | 50 | | 0 |
| Example 7 | 34 wt.% | 28.83 | | "Pt-PRWF" | 1.65 | | 254 | 25 | | 100 | | 0 |
| Example 8 | 34 wt.% | 28.83 | | "Pt-PRWF" | 1.65 | | 381 | 43 | | 0 | | 0 |
| Example 9 | 42 wt.% | 17.98 | | "SnO₂10E" | 5.22 | | 762 | 100 | | 0 | | 0 |
| Example 10 | 42 wt.% | 17.98 | | "SnO₂10E" | 2.61 | | 762 | 100 | | 0 | | 0 |
| Example 11 | 42 wt.% | 18.75 | | "SnO₂30E" | 7.48 | | 762 | 100 | | 0 | | 0 |
| Example 12 | 42 wt.% | 18.75 | | "SnO₂30E" | 3.74 | | 762 | 100 | | 0 | | 0 |
| Example 13 | 42 wt.% | 18.52 | | "BA50E" | 4.62 | | 762 | 100 | | 0 | | 0 |
| Example 14 | 42 wt.% | 18.52 | | "BA50E" | 1.15 | | 762 | 100 | | 0 | | 0 |
| Example 15 | 42 wt.% | 17.90 | | "BA50E" | 1.10 | | 381 | 50 | | 50 | | 0 |
| Example 16 | 42 wt.% | 18.52 | | "EA50E" | 4.40 | | 762 | 100 | | 0 | | 0 |
| Example 17 | 42 wt.% | 18.52 | | "EA50E" | 4.40 | | 381 | 50 | | 50 | | 0 |
| Example 18 | 42 wt.% | 18.52 | | "EA50E" | 2.20 | | 381 | 50 | | 50 | | 0 |
| Example 19 | 42 wt.% | 17.90 | | "EA50E" | 1.10 | | 381 | 50 | | 50 | | 0 |
| Example | 42 wt.% | 19.96 | | "EA20E" | 21.56 | | 381 | 50 | | 50 | | 0 |
| 20 | | | | | | | | | | | | |
| Example 21 | 42 wt.% | 19.96 | | "EA20E" | 10.78 | | 762 | 100 | | 0 | | 0 |
| Example 22 | 42 wt.% | 19.96 | | "EA20E" | 10.78 | | 381 | 50 | | 50 | | 0 |
| Example 23 | 42 wt.% | 19.96 | | "EA20E" | 5.39 | | 762 | 100 | | 0 | | 0 |
| Example 24 | 42 wt.% | 17.90 | | "F50E" | 1.10 | | 381 | 50 | | 50 | | 0 |
| Example 25 | 42 wt.% | 17.90 | | "VA50E" | 1.10 | | 381 | 50 | | 50 | | 0 |
| Example 26 | 42 wt.% | 17.90 | | "VA20E" | 1.10 | | 381 | 50 | | 50 | | 0 |
| Example 27 | 42 wt.% | 19.96 | | "EA20E" | 10.78 | | 381 | 50 | | 50 | | 50 |

### Example 2

The membrane of Example 2 was prepared and tested as in Example 1, except that the three-layer construction (see Table 3, above, and FIG. 2C) was produced by laminating three separate membranes together, with the platinum in the middle layer (Layer 1), was supported on whiskers of perylene red pigment (PR 149). These whiskers were prepared as described under the heading "Preparation of Nanostructured Thin Film (NSTF) Catalyst" above, except that the whiskers had only one fifth of the 0.25 mg/cm² platinum loading of the Pt-NSTF whiskers used in the CCM cathodes of these experiments. Fragments of these low-loading platinum-coated perylene red whisker fragments ("Pt-PRWF") containing a platinum loading of 50 micrograms/cm² (measured geometrically as deposited on the MCTS substrate) were removed from the MCTS with a brush and collected.

A 9 wt.% suspension of the supported platinum catalyst ("Pt-PRWF" in this example) was prepared by stirring 0.9 gram of the supported catalyst into 9 grams of deionized water, with continued stirring overnight.

To prepare the platinum-bearing membrane for Layer 1, 1.62 gram of the 9 wt.% suspension of the supported platinum catalyst and 28.83 grams of 34 wt.% polymeric perfluorosulfonic acid ion exchange resin solution ("3M825EW SOLUTION") were mixed together and the composite mixture slowly stirred at 100 rpm overnight to obtain a homogeneous mixture. The resulting mixture (i.e., composite formulation) was then immediately used to cast a membrane. A 5 inch (12.7 cm) wide microfilm applicator (wet film thickness: 15 mils (0.38 millimeter) Paul N. Gardner Company, Inc.) was used to coat a 2 mil (51 micrometer) thick polyimide film ("KAPTON") with the composite mixture. The coated sample was dried at 70°C for 15 minutes and then at 120°C for 30 minutes, followed by annealing at 160°C for 10 minutes. The annealed sample was then cooled down to room temperature.

To prepare a triple-layer membrane, the resulting annealed membrane was laminated with two 50 micrometer-thick 825 g/mol equivalent weight polymeric perfluorosulfonic acid proton exchange membranes ("3M825EW MEMBRANE") so that the annealed Pt-PRWF membrane was sandwiched between the two 825 g/mol equivalent weight polymeric perfluorosulfonic acid proton exchange membranes ("3M825EW MEMBRANE") (laminator temperature, 350°F (177°C); applied pressure, 150 psi (1 MPa); and roller speed, 0.5 feet per minute (2.54 mm per second minute)).

The test results are listed in Table 3, above.

### Example 3

The membrane of Example 3 was prepared and tested as in Example 2, except that the membrane for Layer 1 was coated at a wet thickness of only 10 mils (0.25 mm) resulting in a thinner membrane (25 micrometers) and a correspondingly lower total platinum content (see Table 3, above).

The test results are listed in Table 3, above.

### Example 4

The membrane of Example 4 was prepared and tested as in Example 2, except that the membrane for Layer 1 was coated at a wet thickness of only 5 mils (0.13 mm) resulting in a thinner membrane (12 micrometers) and a correspondingly lower total platinum content (see Table 3, above).

The test results are listed in Table 3, above.

### Example 5

The membrane of Example 5 was prepared and tested as in Example 2, except that the membrane for Layer 1 was prepared from a blend composed of 18.75 grams of a 42 wt.% PFSA solution (prepared as described below) and 1.87 gram of a 9 wt.% suspension of platinum supported on tin oxide ("SnO₂30E") prepared as described in Example 2 (see Table 3, above).

The 42 wt.% PFSA solution was prepared by stirring 40 grams of 825 g/mol equivalent weight polymeric perfluorosulfonic acid ion exchange resin ("3M825EW POWDER") into in 55.4 grams of an 80:20 by weight percent ethanol (EtOH) to water.

The test results are listed in Table 3, above.

### Example 6

The membrane of Example 6 was prepared and tested as in Example 5, except that this was a two-layer construction, in which the membrane forming the layer containing platinum catalyst tin oxide ("SnO₂30E") was laminated to only one 50-micrometer-thick 825 g/mol equivalent weight polymeric perfluorosulfonic acid proton exchange membrane ("3M825EW MEMBRANE") (see Table 3, above). During preparation of the full CCM, the membrane layer containing the platinum, Layer 1, was laminated to the iridium anode catalyst that comprised Ir-NSTF.

The test results are listed in Table 3, above.

### Example 7

The two-layer membrane of Example 7 was prepared and tested as in Example 6, except that the platinum-containing membrane for Layer 1 was cast from a blend of 28.83 grams of 34 wt.% polymeric perfluorosulfonic acid ion exchange resin solution ("3M825EW SOLUTION") and 1.65 gram of the 9 wt.% suspension of 50 micrograms/cm² Pt-NSTF perylene red whisker fragments ("Pt-PRWF") from Example 2, using a 254 micrometer (10 mil) wet coating thickness, resulting in a 25-micrometer thick layer. The platinum-containing membrane (Layer 1) was laminated to a 100-micrometer thick 825 g/mol equivalent weight polymeric perfluorosulfonic acid proton exchange membrane ("3M825EW MEMBRANE"), resulting in a total thickness of 125 micrometers.

The test results are listed in Table 32, above.

### Example 8

The single-layer membrane of Example 8 was prepared and tested as in Example 7, except that the platinum-containing membrane for Layer 1 was cast using a 15 mil (0.38 mm) wet coating thickness, resulting in a 43-micrometer thick Layer 1.

This layer was tested by itself, rather than laminating it to one or more PFSA membranes before testing. The test results are listed in Table 3, above.

### Example 9

The single-layer membrane of Example 9 was prepared and tested as in Example 8, except that it was cast from a blend made up of 17.98 grams of a 42 wt.% polymeric perfluorosulfonic acid ion exchange resin solution, prepared as described in Example 5, and 5.22 grams of 42.5 wt.% suspension of tin oxide supported platinum catalyst ("SnO₂10E") in deionized water with a wet thickness of 30 mils (0.76 mm) resulting in a final membrane thickness of 100 micrometers. The 42.5 wt.% suspension of the supported platinum catalyst was prepared by stirring 2.22 grams of supported catalyst ("SnO₂10E") into 3.0 grams of deionized water, with continued stirring overnight. The composition and resulting structure is given in Table 3, above.

The test results are listed in Table 3, above.

### Example 10

The single-layer membrane of Example 10 was prepared and tested as in Example 9, except that it was cast from a blend composed 17.98 grams of the 42 wt.% PFSA solution and 2.61 grams of the 42.5 wt.% suspension of "supported platinum catalyst" ("SnO₂10E") in deionized water, resulting in another 100-micrometer thick membrane having only half of the platinum concentration of Example 9.

The test results are listed in Table 3, above.

### Example 11

The single-layer membrane of Example 11 was prepared and tested as in Example 10, except that the platinum-bearing membrane was made from a mixture containing 18.75 grams of the 42 wt.% PFSA solution and 7.48 grams of a 9 wt.% suspension of a different tin oxide-supported platinum catalyst ("SnO₂30E"), as listed in Table 3, above.

The test results are listed in Table 3, above.

### Example 12

The single-layer membrane of Example 12 was prepared and tested as in Example 10, except that the platinum-bearing membrane was made from a blending containing 18.75 grams of the 42% PFSA solution and 3.74 grams of a 9 wt.% suspension of the tin oxide-supported platinum catalyst ("SnO₂30E") in deionized water, only half of the platinum of Example 11.

The test results are listed in Table 3, above.

### Example 13

The ion-conducting membrane of Example 13 was prepared as a single-layer homogeneous construction containing a carbon-supported platinum catalyst ("BA50E"). 100 micrometer-thick PFSA-based composite membranes, having 50 mg Pt loading per a 1 cm³ volume of the membrane (as listed in Table 2, above), was prepared by mixing together 4.62 grams of a 9 wt.% catalyst ("BA50E") suspension (prepared as in Example 2) and 18.52 grams of a 42 wt.% PFSA solution (prepared as in Example 5). The mixture was slowly stirred at 100 rpm overnight to obtain a homogeneous mixture. The resulting mixture (i.e., composite formulation) was then immediately used to cast a membrane. A 5 inch (12.7 cm) wide microfilm applicator (wet film thickness: 30 mils (0.76 mm), Paul N. Gardner Company, Inc.) was used to coat a 2 mil (51 micrometer) thick substrate ("KAPTON") with the composite mixture. The coated sample was dried at 70°C for 15 minutes and then at 120°C for 30 minutes, followed by annealing at 160°C for 10 minutes. The annealed sample was then cooled down to room temperature. The resultant membrane is described in Table 3, above, and represented in FIG. 2A.

The resulting membrane was used to make a CCM for a hydrogen crossover test. The corresponding CCM was prepared as follows: Nano Structured Thin Film (NSTF) catalyst whiskers on a support film ("KAPTON") (as prepared in the section "Preparation of Nanostructured Thin Film (NSTF) Catalyst," above) were transferred from the support film to a final membrane article through hot roll lamination (temperature, 350°F (177°C); applied pressure, 150 psi (1 MPa); and roller speed: 1.2 fpm (37 cm per minute)), following the procedure described in the section "Preparation of Catalyst-Coated Membrane (CCM)," above. The as-prepared membrane was dried at 110°C for 2 minutes under nitrogen prior to lamination. The Pt-deposited NSTF ("Pt-NSTF," Pt mass loading, 0.25 mg/cm²) was used as the cathode and Iridium (Ir)-deposited NSTF ("Ir-NSTF," Ir mass loading, 0.50 mg/cm²) was used as the anode.

The test results are listed in Table 3, above.

### Example 14

Example 14 was prepared and tested in the same manner as Example 13 above, except that it used 1.15 gram of the 9 wt.% catalyst ("BA50E") suspension with the 18.52 grams of the 42 wt.% PFSA solution, resulting in a lower platinum concentration in the ion-conducting membrane.

The test results are listed in Table 3, above.

### Example 15

Example 15 was a double-layer laminated composite membrane, as represented in FIG. 2B, that was prepared and tested in a manner similar to that of Example 14. To prepare this double layer PFSA-based composite membrane having 6 mg Pt loading per a 1 cm³ volume of the membrane (as listed in Table 2, above), 1.10 gram of a 9 wt.% "BA50E" suspension (prepared as in Example 2) and 17.90 grams of a 42 wt.% PFSA solution (prepared as in Example 5) were mixed together and the composite mixture was slowly stirred at 100 rpm overnight to obtain a homogeneous mixture. The resulting mixture (i.e., composite formulation) was then immediately used to cast a membrane. A 5 inch (12.7 cm) wide microfilm applicator (wet film thickness: 15 mils (0.38 mm), Paul N. Gardner Company, Inc.) was used to coat a 2 mil (51 micrometer) substrate ("KAPTON") with the composite mixture. The coated sample was dried at 70°C for 15 minutes and then at 120°C for 30 minutes, followed by annealing at 160°C for 10 minutes. The annealed sample was then cooled down to room temperature. The double-layer membrane, consisting of a 50 micrometer-thick conventional PFSA membrane ("3M825EW MEMBRANE") and the 50 micrometer-thick composite film containing supported Pt, was prepared through hot roll lamination (laminator temperature, 350°F (177°C); applied pressure, 150 psi (1 MPa); and roller speed, 0.5 fpm (2.54 mm/s)). The same preparation method was used to prepare the corresponding CCM as described in Example 13. However, care was taken to assure that the Ir-NSTF was attached to the membrane surface having the film layer containing catalyst ("BA50E"), so that the catalyst ("BA50E") could be positioned nearer to the anode than to the cathode.

The test results are listed in Table 3.

### Example 16

Example 16 was a single layer membrane prepared and tested as in Example 13, except that a different carbon-supported platinum catalyst ("EA50E") was used. As shown in Table 3 above, 18.52 grams of the 42 wt.% PFSA solution was mixed with 4.40 grams of a 9 wt.% catalyst ("EA50E") suspension. This mixture was cast into a membrane of the form shown in FIG. 2A.

The test results are listed in Table 3, above.

### Example 17

Example 17 was a double layer membrane prepared and tested as in Example 15, except that a different catalyst ("EA50E") was used, and the two-layer composite membrane was made by top-coating a 50-micrometer thick PFSA membrane onto the Pt-containing layer, rather than by lamination. The catalyst ("EA50E") suspension and the PFSA solution were mixed together using 4.40 grams of the 9 wt.% catalyst ("EA50E") suspension with 18.52 grams of the 42 wt.% PFSA solution. The composite mixture was slowly stirred at 100 rpm overnight to obtain a homogeneous mixture. The resulting mixture (i.e., composite formulation) was then immediately used to cast a membrane. An 8-inch (20.32 cm) wide microfilm applicator (wet film thickness: 15 mils (0.38 mm), Paul N. Gardner Company, Inc.) was used to coat a 2 mil (51 micrometer) substrate ("KAPTON") with the composite mixture. The coated samples were dried at 70°C for 15 minutes and then at 120°C for 30 minutes, followed by annealing at 160°C for 10 minutes. The annealed sample was then cooled down to room temperature. The resulting annealed composite film was coated with a 34 wt.% of PFSA solution ("3M825EW SOLUTION") using an 8 inch (20.32 cm) wide microfilm applicator (wet film thickness: 15 mils (0.38 mm)). The coated samples were dried at 70°C for 15 minutes and then at 120°C for 30 minutes, followed by annealing at 160°C for 10 minutes. The resulting double-layer membrane, consisting of a 50 micrometer-thick conventional PFSA "3M825EW MEMBRANE" membrane and the 50 micrometer-thick composite film, were used to make a CCM for hydrogen crossover tests. The same preparation method was used to prepare the corresponding CCM as described in Example 13. The Ir-deposited NSTF was attached to the surface of the film layer containing catalyst ("EA50E") so that the catalyst ("EA50E") would be positioned nearer to the anode than to the cathode.

The test results are listed in Table 3, above.

### Example 18

Example 18 was a double layer membrane prepared and tested as in Example 17, except that only half as much of the 9 wt.% catalyst ("EA50E") suspension was used to make Layer 1 of the composite membrane, as is shown in Table 3, above.

The test results are listed in Table 3, above.

### Example 19

Example 19 was a double layer membrane prepared and tested as in Example 15, except that catalyst "EA50E" was used, and the composite membrane was made by lamination, rather than top-coating. 1.10 gram of the 9 wt.% catalyst ("EA50E") suspension was combined with 17.90 grams of the 42 wt.% PFSA solution to cast Layer 1. Layer 1 was then laminated to a 50-micrometer thick membrane ("3M825EW MEMBRANE") according to the procedure described in Comparative Example B above, to form a double layer composite membrane as shown in FIG. 2B. Note that this laminated membrane is the same as the top-coated composite membrane in Example 17, except that only one quarter as much "EA50E" catalyst was used in Layer 1 of the composite membrane (1.10 gram vs. 4.40 grams).

The test results are listed in Table 3, above.

### Example 20

Example 20 was a double layer membrane prepared and tested as in Example 19, except that a different carbon-supported platinum catalyst ("EA20E") was used, at a higher concentration. The formulation for coating Layer 1 was a mixture of 21.56 grams of a 9 wt.% catalyst suspension ("EA20E") with 19.96 grams of the 42 wt.% PFSA solution that was prepared in Example 5.

The test results are listed in Table 3, above.

### Example 21

Example 21 was a single layer membrane prepared and tested as in Examples 13, 14, and 16, except that a different catalyst ("EA20E") was used, and at a higher weight loading of catalyst. 10.78 grams of a 9 wt.% catalyst ("EA20E") suspension was mixed with 19.96 grams of the 42 wt.% PFSA solution from Example 5 to produce the formulation used for casting Layer 1.

The test results are listed in Table 3, above.

### Example 22

Example 22 was a laminated double layer membrane prepared and tested as in Example 15, except that a different catalyst ("EA20E") was used. The formulation for preparing Layer 1 was obtained by mixing 10.78 grams of catalyst ("EA20E") suspension with 19.96 grams of the 42 wt.% PFSA solution from Example 5.

The test results are listed in Table 3, above.

### Example 23

Example 23 was a single layer membrane prepared and tested as in Example 13, except that a different catalyst ("EA20E") was used, and at a higher weight loading of catalyst. This example is very comparable to Example 21, except with approximately half of the catalyst loading of Example 21. The formulation for casting Layer 1 was produced by mixing 5.39 grams of 9 wt.% aqueous suspension of catalyst ("EA20E") with 19.96 grams of the 42 wt.% PFSA solution prepared in Example 5.

The test results are listed in Table 3, above.

### Example 24

Example 24 was a laminated double layer membrane prepared and tested as in Example 15, except that a different catalyst ("F50E") was used. The formulation for casting Layer 1 was prepared by mixing 1.10 gram of a 9 wt.% aqueous suspension of carbon-supported platinum catalyst ("F50E") with 17.90 grams of the 42 wt.% PFSA solution from Example 5.

The test results are listed in Table 3, above.

### Example 25

Example 25 was a laminated double layer membrane prepared and tested as in Example 15, except that a different catalyst ("VA50E") was used. The formulation used for casting Layer 1 was prepared by mixing 1.10 gram of a 9 wt.% aqueous suspension of carbon-supported Pt catalyst ("VA50E") with 17.90 grams of the 42 wt.% PFSA solution prepared in Example 5.

The test results are listed in Table 3, above.

### Example 26

Example 26 was a laminated double layer membrane prepared and tested as in Example 15, except that a different carbon-supported platinum catalyst ("VA20E") was used. The formulation used to cast Layer 1 was prepared by mixing 1.10 gram of a 9 wt.% aqueous suspension of the carbon-supported platinum catalyst ("VA20E") with 17.90 grams of the 42 wt.% PFSA solution prepared in Example 5.

The test results are listed in Table 3, above.

### Example 27

The membrane of Example 27 was prepared and tested as in Example 2, except that the equally spaced composite membrane for Layer 1 was prepared from a blend composed of 19.96 grams of a 42 wt.% PFSA solution and 10.78 grams of a 9 wt.% suspension of platinum supported on carbon ("EA20E") (see Table 3, above) and Layer1 was located adjacent to the anode side in the resulting CCM, as shown in FIG. 2D.

The 42 wt.% PFSA solution was prepared by stirring 40 grams of 825 g/mol equivalent weight polymeric perfluorosulfonic acid ion exchange resin ("3M825EW POWDER") into 55.4 grams of an 80:20 by weight percent ethanol (EtOH) to water solution.

The 9 wt.% suspension of the supported platinum catalyst ("EA20E") was prepared by stirring 0.9 gram of the supported catalyst into 9 grams of deionized water, with continue stirring overnight.

The test results are listed in Table 3, above.

This invention should not be restricted to the embodiments that are set forth in this application for illustrative purposes. The invention is restricted by the appended claims.

## Claims

1. A water electrolyzer comprising:
a membrane having first and second opposed major surfaces and comprising at least one of metallic Pt or Pt oxide;
a cathode on the first major surface of the membrane, the cathode comprising a first catalyst consisting essentially of both metallic Pt and Pt oxide; and
an anode on the second major surface of the membrane, the anode comprising a second catalyst, wherein the second catalyst is a nanostructured thin film catalyst comprising at least 95 percent by weight of collectively metallic Ir and Ir oxide, calculated as elemental Ir, based on the total weight of the second catalyst, wherein at least one of metallic Ir or Ir oxide is present.

2. The water electrolyzer of claim 1, wherein the second catalyst consists essentially of at least one of metallic Ir or Ir oxide.

3. The water electrolyzer of claim 1, wherein the second catalyst further comprises at least one of metallic Pt or Pt oxide.

4. The water electrolyzer of claim 3, wherein the at least one of metallic Ir or Ir oxide and at least one of metallic Pt or Pt oxide have a collective weight ratio, calculated as elemental Ir and Pt, respectively, of at least 20:1 Ir to Pt.

5. The water electrolyzer of any preceding claim, wherein the at least one of metallic Ir or Ir oxide of the second catalyst collectively has an areal density of at least 0.01 mg/cm².

6. The water electrolyzer of any preceding claim, wherein the membrane further comprises polymer electrolyte.

7. The water electrolyzer of claim 6, wherein the polymer electrolyte is at least one of perfluorosulfonic acid or perfluorosulfonimide acid.

8. The water electrolyzer of any preceding claim, wherein the at least one of metallic Pt or Pt oxide is collectively present in the membrane at a concentration in a range from 0.05 mg/cm³ to 100 mg/cm³.

9. The water electrolyzer of any preceding claim, wherein the at least one of metallic Pt or Pt oxide is distributed throughout the membrane.

10. The water electrolyzer of any of claims 1 to 8, wherein the membrane has a thickness extending between the first and second major surfaces, and first, second, and third regions equally spaced across the thickness, wherein the first region is the closest region to the first major surface, wherein the second region is the closest region to the second major surface, wherein the third region is located between the first and second regions, wherein the first and third regions are each essentially free of both metallic Pt and Pt oxide, and wherein the second region comprises the at least one of metallic Pt or Pt oxide in the membrane.

11. The water electrolyzer of any of claims 1 to 8, wherein the membrane has a thickness extending between the first and second major surfaces, wherein the thickness has a midpoint between the first and second major surfaces, a first region between the first major surface and the midpoint, and a second region between the second major surface and the midpoint, and wherein the first region comprises the at least one of metallic Pt or Pt oxide in the membrane and the second region is essentially free of both metallic Pt and Pt oxide.

12. The water electrolyzer of any of claims 1 to 8, wherein the membrane has a thickness extending between the first and second major surfaces, wherein the thickness has a midpoint between the first and second major surfaces, a first region between the first major surface and the midpoint, and a second region between the second major surface and the midpoint, and wherein the first region is essentially free of both metallic Pt and Pt oxide and the second region comprises the at least one of metallic Pt or Pt oxide in the membrane.

13. The water electrolyzer of any of claims 1 to 8, wherein the membrane has a thickness extending between the first and second major surfaces, wherein the thickness has a midpoint between the first and second major surfaces, wherein the at least one of metallic Pt or Pt oxide in the membrane is present in and only within 0.05 micrometer to 0.5 micrometer from the midpoint toward both the first and second major surfaces of the membrane.

14. The water electrolyzer of any preceding claim, wherein the at least a portion of the at least one of metallic Pt or Pt oxide in the membrane is present on a support.

15. A method of generating hydrogen and oxygen from water, the method comprising:
providing a water electrolyzer of any preceding claim;
providing water in contact with the anode; and
providing an electrical potential difference across the membrane with sufficient current to convert at least a portion of the water to hydrogen and oxygen on the cathode and anode, respectively.

## Patentansprüche

1. Ein Wasserelektrolyseur, umfassend:
eine Membran, die eine erste und eine zweite gegenüberliegende Hauptoberfläche aufweist und umfassend mindestens eines von metallischem Pt oder Pt-Oxid;
eine Kathode auf der ersten Hauptoberfläche der Membran, die Kathode umfassend einen ersten Katalysator, der im Wesentlichen sowohl aus metallischem Pt als auch Pt-Oxid besteht; und
eine Anode auf der zweiten Hauptoberfläche der Membran, die Anode umfassend einen zweiten Katalysator, wobei der zweite Katalysator ein nanostrukturierter Dünnfilmkatalysator ist, umfassend zu mindestens 95 Gewichtsprozent insgesamt metallisches Ir und Ir-Oxid, berechnet als elementares Ir, bezogen auf das Gesamtgewicht des zweiten Katalysators, wobei mindestens eines von metallischem Ir oder Ir-Oxid vorhanden ist.

2. Der Wasserelektrolyseur nach Anspruch 1, wobei der zweite Katalysator im Wesentlichen aus mindestens einem von metallischem Ir oder Ir-Oxid besteht.

3. Der Wasserelektrolyseur nach Anspruch 1, wobei der zweite Katalysator ferner mindestens eines von metallischem Pt oder Pt-Oxid umfasst.

4. Der Wasserelektrolyseur nach Anspruch 3, wobei das mindestens eine von metallischem Ir oder Ir-Oxid und das mindestens eine von metallischem Pt oder Pt-Oxid ein Gesamtgewichtsverhältnis, berechnet als elementares Ir beziehungsweise Pt, von mindestens 20:1 Ir zu Pt aufweisen.

5. Der Wasserelektrolyseur nach einem der vorstehenden Ansprüche, wobei das mindestens eine von metallischem Ir oder Ir-Oxid des zweiten Katalysators insgesamt eine Flächendichte von mindestens 0.01 mg/cm² aufweist.

6. Der Wasserelektrolyseur nach einem der vorstehenden Ansprüche, wobei die Membran ferner Polymerelektrolyt umfasst.

7. Der Wasserelektrolyseur nach Anspruch 6, wobei der Polymerelektrolyt mindestens eines von Perfluorsulfonsäure oder Perfluorsulfonimidsäure ist.

8. Der Wasserelektrolyseur nach einem der vorstehenden Ansprüche, wobei das mindestens eine von metallischem Pt oder Pt-Oxid in der Membran insgesamt in einer Konzentration in einem Bereich von 0.05 mg/cm³ bis 100 mg/cm³ vorhanden ist.

9. Der Wasserelektrolyseur nach einem der vorstehenden Ansprüche, wobei das mindestens eine von metallischem Pt oder Pt-Oxid in der Membran verteilt ist.

10. Der Wasserelektrolyseur nach einem der Ansprüche 1 bis 8, wobei die Membran eine Dicke, die sich zwischen der ersten und der zweiten Hauptoberfläche erstreckt, und eine erste, eine zweite und eine dritte Region, die gleichmäßig über die Dicke beabstandet sind, aufweist, wobei die erste Region die am nächsten an der ersten Hauptoberfläche liegende Region ist, wobei die zweite Region die am nächsten an der zweiten Hauptoberfläche liegende Region ist, wobei die dritte Region zwischen der ersten und der zweiten Region gelegen ist, wobei die erste und die dritte Region jeweils im Wesentlichen frei von sowohl metallischem Pt als auch Pt-Oxid sind und wobei die zweite Region das mindestens eine von metallischem Pt oder Pt-Oxid in der Membran umfasst.

11. Der Wasserelektrolyseur nach einem der Ansprüche 1 bis 8, wobei die Membran eine Dicke aufweist, die sich zwischen der ersten und der zweiten Hauptoberfläche erstreckt, wobei die Dicke einen Mittelpunkt zwischen der ersten und der zweiten Hauptoberfläche, eine erste Region zwischen der ersten Hauptoberfläche und dem Mittelpunkt und eine zweite Region zwischen der zweiten Hauptoberfläche und dem Mittelpunkt aufweist und wobei die erste Region das mindestens eine von metallischem Pt oder Pt-Oxid in der Membran umfasst und die zweite Region im Wesentlichen frei von sowohl metallischem Pt als auch Pt-Oxid ist.

12. Der Wasserelektrolyseur nach einem der Ansprüche 1 bis 8, wobei die Membran eine Dicke aufweist, die sich zwischen der ersten und der zweiten Hauptoberfläche erstreckt, wobei die Dicke einen Mittelpunkt zwischen der ersten und der zweiten Hauptoberfläche, eine erste Region zwischen der ersten Hauptoberfläche und dem Mittelpunkt und eine zweite Region zwischen der zweiten Hauptoberfläche und dem Mittelpunkt aufweist und wobei die erste Region im Wesentlichen frei von sowohl metallischem Pt als auch Pt-Oxid ist und die zweite Region das mindestens eine von metallischem Pt oder Pt-Oxid in der Membran umfasst.

13. Der Wasserelektrolyseur nach einem der Ansprüche 1 bis 8, wobei die Membran eine Dicke aufweist, die sich zwischen der ersten und der zweiten Hauptoberfläche erstreckt, wobei die Dicke einen Mittelpunkt zwischen der ersten und der zweiten Hauptoberfläche aufweist, wobei das mindestens eine von metallischem Pt oder Pt-Oxid in der Membran in und nur innerhalb von 0.05 Mikrometern bis 0.5 Mikrometern von dem Mittelpunkt zu sowohl der ersten als auch der zweiten Hauptoberfläche der Membran vorhanden ist.

14. Der Wasserelektrolyseur nach einem der vorstehenden Ansprüche, wobei der mindestens eine Teil des mindestens einen von metallischem Pt oder Pt-Oxid in der Membran auf einem Träger vorhanden ist.

15. Ein Verfahren zum Erzeugen von Wasserstoff und Sauerstoff aus Wasser, das Verfahren umfassend:
Bereitstellen eines Wasserelektrolyseurs nach einem der vorstehenden Ansprüche;
Bereitstellen von Wasser in Kontakt mit der Anode; und
Bereitstellen einer elektrischen Potentialdifferenz quer durch die Membran mit ausreichendem Strom, um jeweils an der Kathode und der Anode mindestens einen Teil des Wassers in Wasserstoff und Sauerstoff umzuwandeln.

## Revendications

1. Électrolyseur d'eau comprenant:
une membrane ayant des première et deuxième surfaces principales opposées et comprenant au moins un parmi du Pt métallique ou un oxyde de Pt;
une cathode sur la première surface principale de la membrane, la cathode comprenant un premier catalyseur constitué sensiblement à la fois de Pt métallique et d'oxyde de Pt; et
une anode sur la deuxième surface principale de la membrane, l'anode comprenant un deuxième catalyseur, dans lequel le deuxième catalyseur est un catalyseur en film mince nanostructuré comprenant au moins 95 pour cent en poids collectivement d'Ir métallique et d'oxyde d'Ir, calculé en tant qu'Ir élémentaire, sur la base du poids total du deuxième catalyseur, dans lequel au moins un parmi de l'Ir métallique ou de l'oxyde d'Ir est présent.

2. Électrolyseur d'eau selon la revendication 1, dans lequel le deuxième catalyseur est constitué sensiblement d'au moins un parmi de l'Ir métallique ou de l'oxyde d'Ir.

3. Électrolyseur d'eau selon la revendication 1, dans lequel le deuxième catalyseur comprend en outre au moins un parmi du Pt métallique ou de l'oxyde de Pt.

4. Électrolyseur d'eau selon la revendication 3, dans lequel l'au moins un parmi de l'Ir métallique ou de l'oxyde d'Ir et au moins un parmi du Pt métallique ou de l'oxyde de Pt ont un rapport pondéral collectif, calculé en tant qu'Ir et Pt élémentaires, respectivement, d'au moins 20:1 de l'Ir au Pt.

5. Électrolyseur d'eau selon une quelconque revendication précédente, dans lequel l'au moins un parmi de l'Ir métallique ou de l'oxyde d'Ir du deuxième catalyseur a collectivement une densité surfacique d'au moins 0.01 mg/cm².

6. Électrolyseur d'eau selon une quelconque revendication précédente, dans lequel la membrane comprend en outre un électrolyte polymère.

7. Électrolyseur d'eau selon la revendication 6, dans lequel l'électrolyte polymère est au moins un parmi de l'acide perfluorosulfonique ou de l'acide perfluorosulfonimide.

8. Électrolyseur d'eau selon une quelconque revendication précédente, dans lequel l'au moins un parmi le Pt métallique ou l'oxyde de Pt est collectivement présent dans la membrane à une concentration dans une plage allant de 0.05 mg/cm³ à 100 mg/cm³.

9. Électrolyseur d'eau selon une quelconque revendication précédente, dans lequel l'au moins un parmi du Pt métallique ou de l'oxyde de Pt est réparti sur l'ensemble de la membrane.

10. Électrolyseur d'eau selon l'une quelconque des revendications 1 à 8, dans lequel la membrane a une épaisseur s'étendant entre les première et deuxième surfaces principales, et des première, deuxième et troisième régions espacées de manière égale à travers l'épaisseur, dans lequel la première région est la région la plus proche de la première surface principale, dans lequel la deuxième région est la région la plus proche de la deuxième surface principale, dans lequel la troisième région est située entre les première et deuxième régions, dans lequel les première et troisième régions sont chacune sensiblement dépourvues à la fois de Pt métallique et d'oxyde de Pt, et dans lequel la deuxième région comprend l'au moins un parmi du Pt métallique ou de l'oxyde de Pt dans la membrane.

11. Électrolyseur d'eau selon l'une quelconque des revendications 1 à 8, dans lequel la membrane a une épaisseur s'étendant entre les première et deuxième surfaces principales, dans lequel l'épaisseur a un point médian entre les première et deuxième surfaces principales, une première région entre la première surface principale et le point médian, et une deuxième région entre la deuxième surface principale et le point médian, et dans lequel la première région comprend l'au moins un parmi du Pt métallique ou de l'oxyde de Pt dans la membrane et la deuxième région est sensiblement dépourvue à la fois de Pt métallique et d'oxyde de Pt.

12. Électrolyseur d'eau selon l'une quelconque des revendications 1 à 8, dans lequel la membrane a une épaisseur s'étendant entre les première et deuxième surfaces principales, dans lequel l'épaisseur a un point médian entre les première et deuxième surfaces principales, une première région entre la première surface principale et le point médian, et une deuxième région entre la deuxième surface principale et le point médian, et dans lequel la première région est sensiblement dépourvue à la fois de Pt métallique et d'oxyde de Pt et la deuxième région comprend l'au moins un parmi du Pt métallique ou de l'oxyde de Pt dans la membrane.

13. Électrolyseur d'eau selon l'une quelconque des revendications 1 à 8, dans lequel la membrane a une épaisseur s'étendant entre les première et deuxième surfaces principales, dans lequel l'épaisseur a un point médian entre les première et deuxième surfaces principales, dans lequel l'au moins un parmi du Pt métallique ou de l'oxyde de Pt dans la membrane est présent à et seulement à plus ou moins 0.05 micromètre à 0.5 micromètre du point médian en direction de l'une et l'autre des première et deuxième surfaces principales de la membrane.

14. Électrolyseur d'eau selon une quelconque revendication précédente, dans lequel l'au moins une partie de l'au moins un parmi du Pt métallique ou de l'oxyde de Pt dans la membrane est présent sur un support.

15. Procédé de génération d'hydrogène et d'oxygène à partir d'eau, le procédé comprenant:
la fourniture d'un électrolyseur d'eau selon une quelconque revendication précédente,
la fourniture d'eau en contact avec l'anode; et
la fourniture d'une différence de potentiel électrique à travers la membrane avec un courant suffisant pour convertir au moins une partie de l'eau en hydrogène et en oxygène sur la cathode et l'anode, respectivement.
